(19) Europäisches Patentamt
European Patent Office
Office européen des brevets

(11) EP 3 647 838 A1

(12) **EUROPEAN PATENT APPLICATION**
published in accordance with Art. 153(4) EPC

(43) Date of publication:
06.05.2020 Bulletin 2020/19

(21) Application number: 18825418.9

(22) Date of filing: 24.05.2018

(51) Int Cl.:
G02B 5/26 (2006.01)    B32B 7/02 (2019.01)
B32B 17/06 (2006.01)    C09J 7/20 (2018.01)
C09J 201/00 (2006.01)    G02B 5/28 (2006.01)

(86) International application number:
PCT/JP2018/019946

(87) International publication number:
WO 2019/003733 (03.01.2019 Gazette 2019/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.06.2017 JP 2017124122

(71) Applicant: Nitto Denko Corporation
Ibaraki-shi, Osaka 567-8680 (JP)

(72) Inventors:
• KONTANI, Tomohiro
Ibaraki-shi
Osaka 567-8680 (JP)
• OHMORI, Yutaka
Ibaraki-shi
Osaka 567-8680 (JP)

(74) Representative: Gill Jennings & Every LLP
The Broadgate Tower
20 Primrose Street
London EC2A 2ES (GB)

(54) **INFRARED RAY-REFLECTIVE SUBSTRATE**

(57) Provided is an infrared reflective substrate having both a high visible light transmittance and a high heat shielding property. The infrared reflective substrate comprises a transparent substrate member and an infrared reflective layer, wherein the infrared reflective substrate has a visible light absorption rate of 0.3 or less, and a reflectance whose slope in a wavelength range of 700 nm to 600 nm is 0.12 or more.

FIG.4

**Description**

TECHNICAL FIELD

The present invention relates to an infrared reflective substrate comprising a transparent substrate member and a thin film of an infrared reflective layer on the transparent substrate member.

BACKGROUND ART

Theretofore, there has been known an infrared reflective substrate comprising a substrate member such as a glass or a film, and an infrared reflective layer on the substrate member. This type of infrared reflective substrate is configured, for example, such that a window glass is utilized as a substrate member which is integrated with an infrared reflective layer formed on an indoor side of the window glass, or that a film is used as a substrate and an infrared reflective layer is formed on an indoor side of the film, whereby it is possible to reflect near-infrared rays of solar light or the like entering from the outside into indoor space to bring out an heat insulating effect. In addition to the window glass, this type of infrared reflective substrate can also be used in any other structural member which requires blocking light from the outside, such as a showcase.

In this type of infrared reflective substrate, a higher heat shielding property is deemed to be more desirable. However, if the heat shielding property is enhanced, a visible light transmittance is undesirably lowered, leading to deterioration in visibility from the inside. That is, even in a conventional infrared reflective substrate, the heat shielding property can be enhanced by lowering an optical transmittance. However, if the light transmittance is lowered so as to enhance the heat shielding property, the visible light transmittance is also lowered. Therefore, in recent years, it has been desired to satisfy both a high light blocking property and a high visible light transmittance.

For example, in an area in the vicinity of the equator, such as south-eastern Asia, having high temperatures and strong heat rays from solar light, it is desired to provide an infrared reflective substrate having a higher heat shielding property with a heat shielding coefficient of 0.25 or less, although it is allowed to have a low visible light transmittance of about 40%. However, in some areas, from the perspective of aesthetic appearance, it is desired to provide an infrared reflective substrate having a heat shielding property with a heat shielding coefficient of 0.5 or less, while maintaining the visible light transmittance at 65% or more.

As one example of such an infrared reflective substrate, the following Patent Document 1 discloses an infrared reflective film comprising two metal layers. This infrared reflective film is intended to have a high visible light transmittance and a low total solar heat transmittance.

CITATION LIST

[Parent Document]

Patent Document 1: JP 2011-509193A
Patent Document 2: JP 2013-061370A

SUMMARY OF INVENTION

[Technical Problem]

However, there is a trade-off relationship between the heat shielding property and the visible light transmittance, so that it has heretofore been difficulty to satisfy both a high heat shielding property and a high visible light transmittance. For example, in a conventional infrared reflective substrate having a relatively high visible light transmittance of 70%, the heat shielding coefficient was greater than about 0.55. Further, in a conventional infrared reflective substrate having a relatively low visible light transmittance of 40%, the heat shielding coefficient was greater than about 0.35. In fact, Examples 1 and 2 of the infrared reflective film disclosed in the Patent Document 1 have high visible light transmittances of 77% and 78%, respectively, whereas they have solar heat gain coefficients (TSHTs) of 55 and 53, respectively. When the solar heat gain coefficient is converted into shading coefficient, the resulting shading coefficients have high values of 62.5 and 60.2, respectively, which shows that both of Examples 1 and 2 are poor in terms of heat shielding property.

A problem to be solved by the present invention is to provide an infrared reflective substrate having both a high visible light transmittance and a high heat shielding property.

[Solution to Technical Problem]

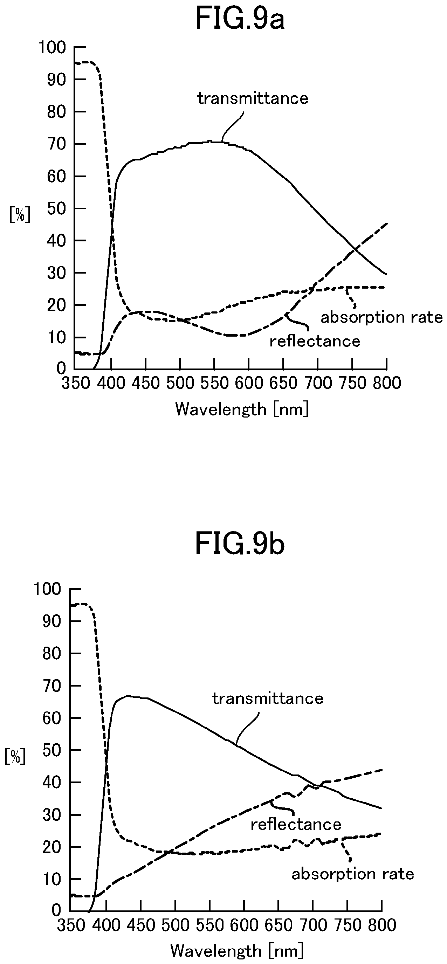

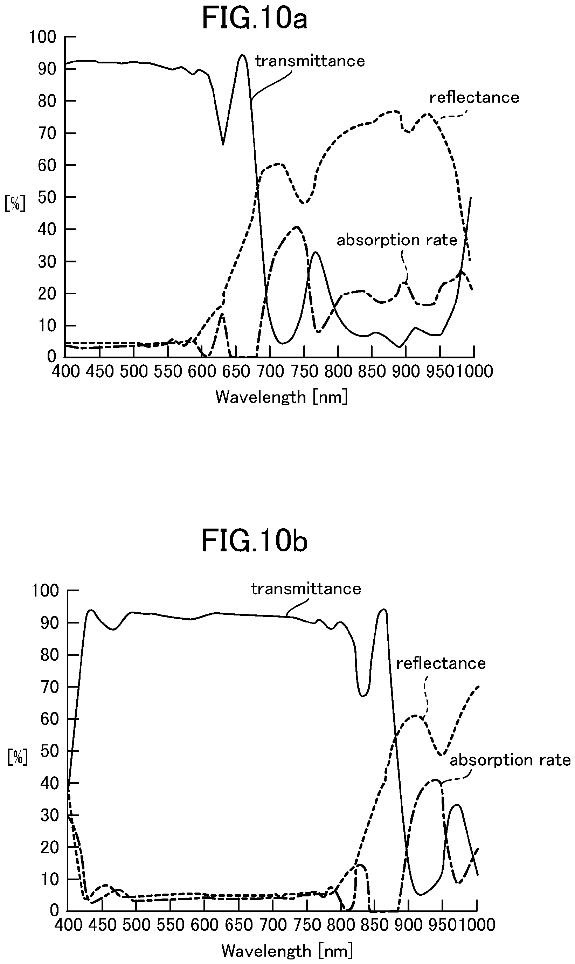

Although a conventional infrared reflective substrate can exhibit a high heat shielding property, it has a disadvantage that the reflectance is relatively high in a visible light region and the visible light transmittance becomes low accordingly, as is evident from the spectrum in FIG. 9b. Further, a conventional infrared reflective film whose spectrum is shown in FIG. 10b has a reflective property in which, considering that visible light generally has a wavelength range of 400 nm to 700 nm, the reflectance is suppressed until around 700 nm to raise the transmittance, and then the reflectance is raised from around 750 nm toward the long wavelength side. However, it is difficult to design the infrared reflective substrate such that the reflectance sharply rises from a specific wavelength. Therefore, even when the infrared reflective substrate is designed to raise the reflectance from around 750 nm, the reflectance does not sufficiently rise in a near-infrared region, and a large part of near-infrared light is undesirably transmitted through the infrared reflective substrate. As a result, due to transmission of near-infrared light, the heat shielding property of the infrared reflective substrate is deteriorated.

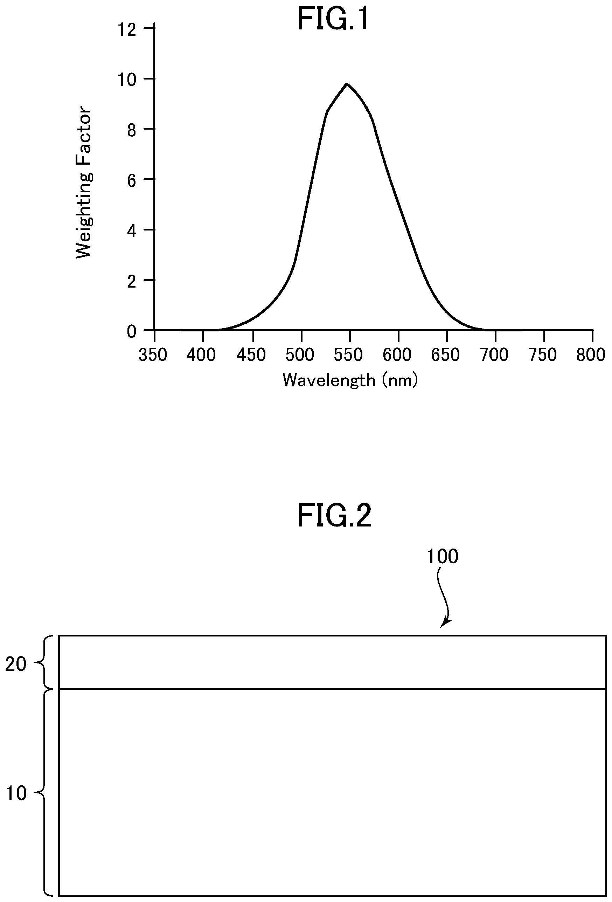

Meanwhile, even in the visible light region, the human eye's sensitivity is not even, i.e., varies according to wavelength. For example, even in the visible light region, the human eye's sensitivities with respect to light having a wavelength of around 550 nm and light having a wavelength of around 700 nm are lower than the sensitivity with respect to light having a wavelength around the center of the visible light region. Therefore, in order to allow the visible light transmittance to correspond to brightness to be felt by human, the visible light transmittance is calculated by multiplying the rate of actually transmitted light by a weighting factor set with respect to each wavelength, according to the eye's sensitivities. FIG. 1 is a graph showing a weighting factor for calculating the visible light transmittance. In FIG. 1, the horizontal axis represents wavelength, and the vertical axis represents weighting factor. Referring to FIG. 1, the weighting factor becomes highest, specifically, has a value of a little under 10, at a wavelength of 550 nm, and becomes equal to or less than 1, in a wavelength range of 650 nm to 700 nm.

Considering that, even in the visible light region, in the vicinity of a long wavelength-side boundary, the eye's sensitively is relatively low, and the weighting factor of the visible light transmittance is relatively low, a slope of the reflectance is increased on the long wavelength side in the visible light region, thereby raising a reflectance with respect to near-infrared light, while suppressing an influence on the visible light transmittance, whereby the infrared reflective substrate of the present invention can have both a high visible light transmittance and a low heat shielding coefficient.

According to one aspect of the present invention, there is provided an infrared reflective substrate which comprises a transparent substrate member and an infrared reflective layer, wherein the infrared reflective film has a visible light absorption rate of 0.3 or less, and a reflectance whose slope in a wavelength range of 700 nm to 600 nm (slope $dR_{700\text{-}600}$) is 0.12 or more, and wherein the slope $dR_{700\text{-}600}$ of the reflectance is expressed as follows: $dR_{700\text{-}600} = (R_{700} - R_{600}) / 100$ (nm), where $R_{600}$ represents a reflectance (%) with respect to light entering from the side of the transparent substrate member as measured at a wavelength of 600 nm, and $R_{700}$ represents a reflectance (%) with respect to light entering from the side of the transparent substrate member as measured at a wavelength of 700 nm.

In the infrared reflective substrate of the present invention, the reflectance $R_{600}$ is preferably set in the range of 10 % to 60 %. This is because, by lowering the reflectance at a wavelength of 600 nm, it becomes possible to raise the visible light transmittance. Further, the reflectance $R_{700}$ is preferably set in the range of 25 % to 85 %. This is because, by raising the reflectance at a wavelength of 700 nm, it becomes possible to lower the shading coefficient, while keeping down the influence on the visible light transmittance. Further, a ratio of the reflectance $R_{700}$ to the reflectance $R_{700}$ is preferably set to 1.2 or more. By raising this reflectance ratio, it becomes possible to allow the infrared reflective substrate to satisfy both the visible light transmittance and the shading coefficient at a higher level. In the infrared reflective substrate of the present invention, a top wavelength in terms of the visible light transmittance may be set to lie between wavelengths of 450 nm and 650 nm. In this case, it becomes possible to raise the visible light transmittance. Further, when the transparent substrate member is a film, the infrared reflective substrate may further comprise a pressure-sensitive adhesive layer on one surface of the transparent substrate member whose opposite surface has the infrared reflective layer. Alternatively, the transparent substrate member may be a glass. The infrared reflective substrate of the present invention may further comprise a transparent protective film on the infrared reflective layer. In this case, it becomes possible to improve durability thereof.

There is a trade-off relationship between the visible light transmittance (VLT) and the shading coefficient (SC), because the heat insulating coefficient becomes lower as the amount of transmitted light (light transmittance) is reduced. Thus, the property of the infrared reflective film in consideration of the two parameter is expressed, e.g., as follows: [VLT (%) - 160 $\times$ SC]. This formula is based on the assumption that, when the visible light transmittance is sacrificed by 1%, the shading coefficient can be lowered by 1/160. In one embodiment, the infrared reflective substrate of the present invention may have a property in which a value of [VLT (%) - 160 $\times$ SC] is - 12 or more. This value is preferably 0 or more, more preferably 10 or more, further preferably 15 or more. Further, in view of other factors, such as durability, this parameter may be set to 20 or less or may be set to 17 or less.

[Effect of Invention]

The infrared reflective substrate of the present invention can have both of a high visible light transmittance and a low heat shielding coefficient.

BRIEF DESCRIPTION OF DRAWINGS

FIG. 1 is a graph showing a weighting factor for calculating a visible light transmittance.
FIG. 2 is a sectional view schematically showing an example of the configuration of an infrared reflective substrate according to one embodiment of the present invention.
FIG. 3 is a sectional view schematically showing an example of a usage mode of the infrared reflective substrate according to this present invention.
FIG. 4 is a graph showing a transmittance and a reflectance of the infrared reflective substrate according to this embodiment, with respect to light entering from the side of a substrate member of the infrared reflective substrate.
FIG. 5 is a schematic diagram showing a layer configuration of an infrared reflective substrate 500 according to a specific embodiment of the present invention.
FIG. 6 is a schematic diagram showing a layer configuration of an infrared reflective substrate 600 according to another specific embodiment of the present invention.
FIG. 7 is a schematic diagram showing a layer configuration of Inventive Example 1.
FIG. 8 is a schematic diagram showing a layer configuration of Inventive Example 8.
FIG. 9a is a graph showing optical properties of Inventive Example 1.
FIG. 9b is a graph showing optical properties of Comparative Example 1.
FIG. 10a is a graph showing optical properties of Inventive Example 9.
FIG. 10b is a graph showing optical properties of Comparative Example 4.
FIG. 11 is a graph showing a relationship between a shading coefficient and a visible light transmittance in each of Inventive Examples and Comparative Examples.

DESCRIPTION OF EMBODIMENTS

FIG. 2 is a sectional view schematically showing an example of the configuration of an infrared reflective substrate according to one embodiment of the present invention. As shown in FIG. 2, the infrared reflective substrate 100 according to this embodiment comprises a transparent substrate member 10, and an infrared reflective layer 20 on one principal surface of the transparent substrate member 10. In this embodiment, the infrared reflective layer 20 is disposed in direct contact with the transparent substrate member 10. Alternatively, one or more other layers may be provided therebetween. For example, with a view to enhancing durability, an undercoat layer may be provided between the infrared reflective layer 20 and the transparent substrate member 10. Further, a transparent protective layer (not shown) for protecting the infrared reflective layer 20 may be provided on an upper surface of the infrared reflective layer, i.e., one principal surface of the infrared reflective layer on a side opposite to the transparent substrate member 10.

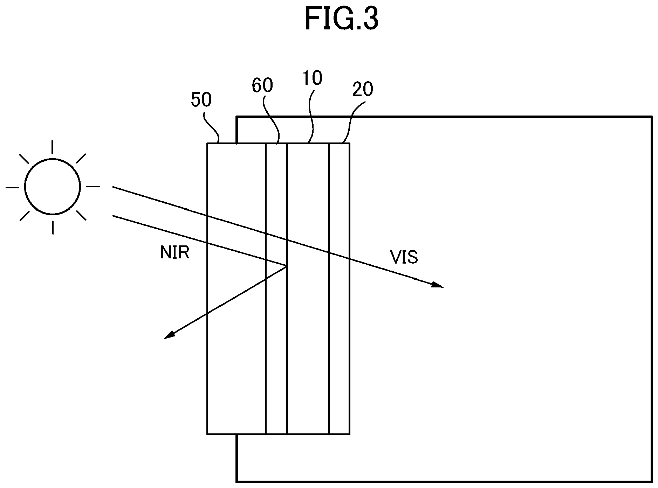

FIG. 3 is a sectional view schematically showing an example of a usage mode of the infrared reflective substrate according to this embodiment to schematically explain functions of the infrared reflective substrate. In this usage mode, the transparent substrate member of the infrared reflective substrate is a film-based transparent substrate member. The infrared reflective substrate 100 is used in a state in which a principal surface thereof on the side of the transparent substrate member is bonded to an indoor side of a window glass 50 of a building or automobile, through a pressure-sensitive adhesive layer 60 or the like. As shown in FIG. 3, the infrared reflective substrate 100 is capable of transmitting visible rays or light (VIS) from an outdoor space to introduce it into an indoor space, while reflecting near-infrared rays (NIR) from the outdoor space by the infrared reflective layer 20. Based on the reflection of near-infrared rays, it is possible to suppress heat rays entering from the out door into the indoor space due to solar light and other (to bring out a heat shielding effect), thereby enhancing cooling efficiency in summer.

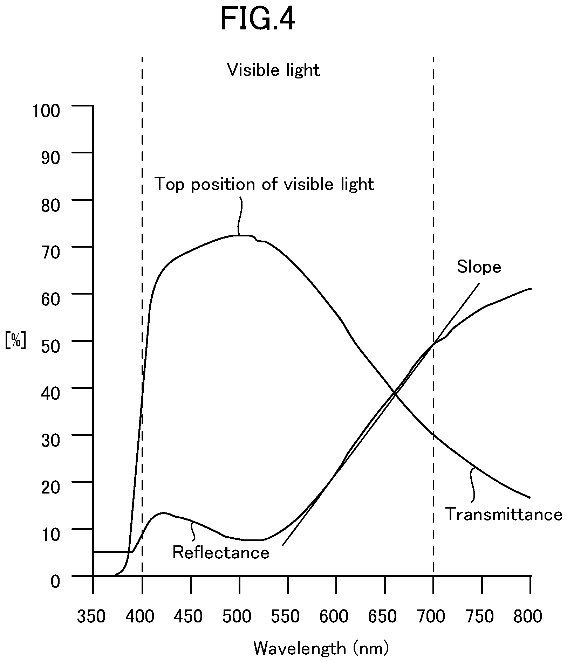

FIG. 4 is a graph showing a transmittance and a reflectance of the infrared reflective substrate 100 according to this embodiment, with respect to light entering from the side of the substrate member. In FIG. 4, the horizontal axis represents wavelength (nm), and the vertical axis represents transmittance (%) and Reflectance (%). In FIG. 4, the infrared reflective substrate is bonded to a single plate glass based on JIS A5759-2008 (films for building glazings). Light entering the infrared reflective substrate 100 results in any of transmission, reflection and absorption, so that a value obtained by subtracting a transmittance and a reflectance from 100% is equal to an absorption rate.
In a wavelength range of 400 nm to 550 nm, which is equivalent to a short wavelength side in a visible light region, the infrared reflective substrate 100 has a relatively high transmittance of about 70%, and a relatively low reflectance of about 10%. In a wavelength range of around 550 nm toward a long wavelength side in the visible light region, the reflectance becomes high, and, at 700 nm which is around a long wavelength-side boundary of the visible light region, the reflectance becomes greater than 50%. Then, in a near-infrared region having a longer wavelength than those in the visible light region, the infrared reflective substrate 100 has a reflectance of greater than 50%, in a wavelength range of 700 nm to 800 nm which are wavelengths close to those in the visible light region. As above, the light reflectance is sufficiently high even in the wavelength range of 700 nm to 800 nm, which is a part of the near-infrared region close to the visible light region, because the reflectance has a relatively steep slope in a wavelength range of 600 nm to 700 nm. Since the infrared reflective substrate 100 has a sufficiently high light reflectance even in a part of the near-infrared region close to the visible light region, as mentioned above, it exhibits a high heat shielding property, wherein a heat shielding coefficient is 0.50.

In this application, the slope of the reflectance is set based on a definition described in the following formula 1:

$$dR_{\lambda upper-\lambda lower} = \frac{\left(R_{\lambda upper}(\%)\ R_{\lambda lower}(\%)\right)}{(\lambda upper\ \lambda lower)}\ (nm) \quad \text{--- Formula 1}$$

, where $\lambda$: wavelength (nm) ("upper" represents the long wavelength side, and "lower" represents the short wavelength side),

$R_\lambda$: a reflectance (%) at a wavelength $\lambda$, and

$dR_{\lambda upper - \lambda lower}$: the slope (%/nm) of the reflectance in the range of a wavelength $\lambda upper$ to a wavelength $\lambda lower$.

The infrared reflective substrate 100 is designed such that the reflectance becomes higher in a wavelength range of 600 nm to 700 nm, so that the reflectance becomes lower in the wavelength range. However, the weighting factor in calculation of the visible light transmittance is relatively low in the wavelength range of 600 nm to 700 nm, as shown in FIG. 1, so that an influence of the rise in reflectance on the visible light transmittance is small. Therefore, the infrared reflective substrate 100 has a high visible light transmittance of 68%, irrespective of its high heat shielding property.

The configuration, material, etc., of each layer in a preferred embodiment will be described below.

[Transparent Substrate Member]

As the transparent substrate member 10, a material having a visible light transmittance of 80% or more can be suitably used. It should be noted here that the visible light transmittance is measured according to JIS A5759-2008 (films for building glazings).

The thickness of the transparent substrate member 10 is typically set to, but not particularly limited to, about 10 μm to about 10 mm. As the transparent substrate member, it is possible to use a glass sheet, a flexible transparent resin film or the like. From a viewpoint of enhancing productivity of the infrared reflective substrate and facilitating an operation of bonding the infrared reflective substrate to a window glass or the like, a flexible transparent resin film is suitably used as the transparent substrate member 10. In the case where the transparent resin film is used as the transparent substrate member, the thickness thereof is preferably set to about 10 to 300 μm, more preferably 100 μm or less, further preferably 50 μm or less, much further preferably 40 μm or less. Further, there are some cases where, when a process of forming a metal layer, a metal oxide layer or the like on the transparent substrate member 10 is performed at high temperatures. Thus, a resin material for the film-based transparent substrate member is preferably excellent in heat resistance. Examples of the resin material for the film-based transparent substrate member include polyethylene terephthalate (PET), polyethylene naphthalate (PEN), polyether ether ketone (PEEK), and polycarbonate (PC).

In the case where the transparent substrate member 10 is the film-based transparent substrate member, with a view to enhancing mechanical strength of the infrared reflective substrate, a laminate of a transparent resin film and a cured resin layer provided on a surface of the transparent resin film is suitably used. Further, a cured resin layer may be provided on one surface of a transparent resin film on which the infrared reflective layer 20 is to be formed. In this case, abrasion resistance of the infrared reflective layer 20 and a transparent protective layer formed on the infrared reflective layer 20 tends to be enhanced. The cured resin layer can be formed, for example, by a method which comprises additionally providing a cured coating formed from an appropriate ultraviolet-curable resin, such as acrylic-based resin or silicone-based resin, onto the transparent resin film. As the cured resin layer, a cured resin having high hardness is suitably used.

With a view to enhancing adhesion, the surface of the transparent substrate member 10 on which the infrared reflective layer 20 is to be formed may be subjected to a surface modification treatment, such as corona treatment, plasma treatment, flame treatment, ozone treatment, primer treatment, glow treatment, saponification treatment, or treatment using a coupling agent.

[Pressure-Sensitive Adhesive Layer]

In the case where the transparent substrate member 10 is the film-based transparent substrate member, a pressure-sensitive adhesive layer 60 or the like for use in bonding between the infrared reflective substrate and a window glass or the like may be additionally provided onto the other surface of the transparent substrate member 10 on the opposite side of the one surface thereof on which the infrared reflective layer 20 is to be formed. Preferably, the pressure-sensitive adhesive layer 60 is high in terms of the visible light transmittance, and small in terms of a refractive index difference from the transparent substrate member 10. For example, an acrylic-based pressure-sensitive adhesive is suitable as a material for the pressure-sensitive adhesive layer to be additionally provided onto the film-based transparent substrate member, because it is excellent in optical transparency, and exhibits moderate wettability, cohesive property and adherence property, and excellent weather resistance and heat resistance.

Preferably, the pressure-sensitive adhesive layer 60 is high in terms of the visible light transmittance and small in terms of ultraviolet light transmittance. By reducing the ultraviolet light transmittance of the pressure-sensitive adhesive layer 60, it is possible to suppress degradation of the infrared reflective layer due to ultraviolet light such as solar light. From the standpoint of reducing the ultraviolet light transmittance of the pressure-sensitive adhesive layer, the pressure-sensitive adhesive layer preferably contains an ultraviolet absorber. Alternatively, a film-based transparent substrate member containing an ultraviolet absorber may be used to obtain the same effect of suppressing the degradation of the infrared reflective layer due to ultraviolet light entering from outdoor. Preferably, an exposed surface of the pressure-sensitive adhesive layer is covered by a separator temporarily attached thereto so as to prevent contamination of the exposed surface, etc., until the infrared reflective substrate is actually used. This makes it possible to prevent contamination of the exposed surface of the pressure-sensitive adhesive layer due to contact with the outside, in a usual handling state.

Here, even in a case where the transparent substrate member 10 is a flexible film, the infrared reflective substrate may be used in a state in which it is fitted in a frame or the like, as disclosed in e.g., the aforementioned Patent Document 2. This configuration eliminates the need to additionally provide the pressure-sensitive adhesive layer 60 onto the transparent substrate member 10, so that absorption of far-infrared rays by the pressure-sensitive adhesive layer never occurs. Thus, a material (e.g., cyclic polyolefin) containing a small amount of functional group such as a C=C bond, a C=O bond, a C-O bond or an aromatic ring is used for the transparent substrate member 10, to allow far-infrared rays entering from the side of the transparent substrate member 10 to be reflected by the infrared reflective layer 20. This makes it possible to provide a heat insulating property on respective sides of the opposite surfaces of the infrared reflective substrate. This configuration is particularly useful in, e.g., a refrigerator showcase or a freezer showcase.

[Infrared Reflective Layer]

The infrared reflective layer 20 in the above embodiment has a light reflectance whose slope in the wavelength range of 600 nm to 700 nm is relatively high, and may have the following configurations. However, it is to be understood that the present invention is not limited to such configurations.

< Configuration with Two Metal Layers >

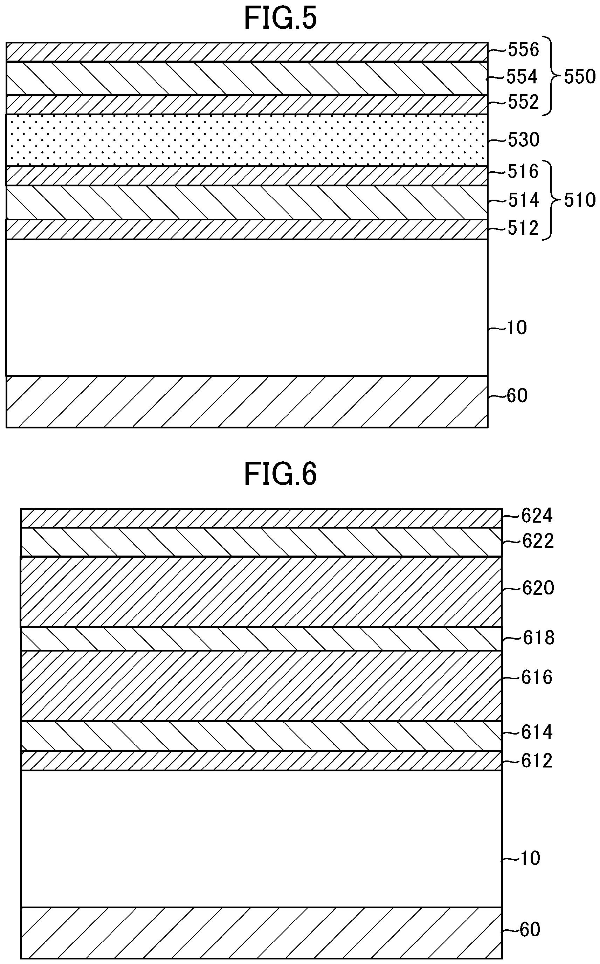

FIG. 5 shows an infrared reflective layer 500 according to a specific embodiment of the present invention. An infrared reflective layer 500 in FIG. 5 is configured to form a Fabry-Perot resonator by two metal layers (two metal thin films). The two metal layers fulfill a role of a half mirror in the Fabry-Perot resonator. Then, a transparent spacer layer is disposed between the two metal thin films to selectively transmit light having a specific wavelength therethrough, and cause reflection or interference/attenuation of light having other wavelengths to shield the light. In the Fabry-Perot resonator, a wavelength range of light to be transmitted and a wavelength range of light to be reflected can be changed by adjusting an optical film thickness (a product of the refractive index and a physical film thickness) of the transparent spacer layer lying between the two metal thin films.

Specifically, the infrared reflective layer 500 comprises a first laminate 510, a transparent spacer layer 530, and a second laminate 550, which are arranged in this order from the side of the substrate member 10. The first laminate 510 comprises a first metal oxide layer 512, a first metal layer 514, and a second metal oxide layer 516, which are arranged in this order from the side of the substrate member 10, and the second laminate comprises a third metal oxide layer 552, a second metal layer 554, and a fourth metal oxide layer 556, which are arranged in this order from the side of the substrate member 10. The first metal layer 514 and the second metal layer 554 correspond to the aforementioned two metal layers fulfilling a role of a half mirror. In this example, the first metal layer is in direct contact with each of the first metal oxide layer and the second metal oxide layer. Alternatively, with a view to protecting the first metal layer or adjusting a refractive index difference between two interfaces, another layer may be provided therebetween. Similarly, although the second metal layer 554 is in direct contact with each of the third metal oxide layer and the fourth metal oxide layer, another layer may be provided therebetween.

< Metal Layer >

The metal layers 514, 554 have a key roll in reflection of infrared rays. As a material for the metal layers 514, 554, it is referable to use a metal having a high reflectance to near-infrared rays, such as silver, gold, copper or aluminum. Among them, as the metal layer to be sandwiched between the metal oxide layers, a silver alloy layer comprising a primary component consisting of silver is suitably used from a viewpoint of enhancing visible light transmittance and near-infrared reflectance without increasing the number of layers. Silver has a high free electron density, so that it can realize a high reflectance to near-infrared and far-infrared rays, and provide an infrared reflective film excellent in heat shielding effect and heat insulating effect, even in a situation where the infrared reflective layer 20 is made up of a small number of layers.

Preferably, each of the metal layers 514, 554 contains silver in an amount of 75 to 99.9 weight%. From a viewpoint of enhancing the visible light transmittance, the content of silver in each of the metal layers 514, 554 is more preferably 80 weight% or more, further preferably 85 weight% or more, particularly preferably 90 weight% or more. For example, the content of silver may be set to 96 weight% or more. In this case, it becomes possible to enhance wavelength selectivity of transmission and reflection to enhance the visible light transmittance. As the content of silver in each of the metal layers 514, 554 increases, the visible light transmittance of the infrared reflective film tends to rise.

On the other hand, in a situation where silver is exposed to an environment in the presence of water, oxygen, chlorine or the like, or irradiated with ultraviolet light or visible light, degradation such as oxidation or corrosion can occur. Therefore, with a view to enhancing durability, each of the metal layers 514, 554 is preferably a silver alloy layer containing a metal other than silver. For example, each of the metal layers 514, 554 contains a metal other than silver preferably in an amount of 0.1 weight% or more, more preferably in an amount of 0.2 weight% or more, further preferably in an amount of 0.3 weight% or more. As a metal to be added to each of the metal layers for enhancing its durability, it is preferable to use, e.g., palladium (Pd), gold (Au), copper (Cu), bismuth (Bi), germanium (Ge) or gallium (Ga). Among them, Pd is most suitably used, from a viewpoint of imparting high durability to silver. When an addition amount of the non-silver metal such as Pd is increased, durability of each of the metal layers tends to be enhanced. On the other hand, if the addition amount of the non-silver metal such as Pd is excessively large, the visible light transmittance of the infrared reflective film tends to be deteriorated. Therefore, the content of the non-silver metal in each of the metal layers is preferably 10 weight% or less, more preferably, 5 weight% or less, further preferably, 3 weight% or less, particularly preferably, 1 weight% or less.

The material for the metal layers to be used from the viewpoint of enhancing durability is not limited to a silver alloy. For example, elemental gold or a gold alloy comprising a primary component consisting of gold may be used. In such a gold alloy, gold is preferably contained in an amount of 75 to 99.9 weight%. In particular, from a viewpoint of raising the visible light transmittance, the content of gold in each of the metal layers is more preferably 80 weight% or more, further preferably 85 weight%, particularly preferably 90 weight%. Further, the gold alloy preferably contains silver as impurity. For example, silver is contained preferably in an amount of 1 to 25 weight%, more preferably in an amount of 10 weight% or less, further preferably in an amount of 5 weight% or less.

The first metal layer 514 and the second metal layer 554 may be made of different metals, respectively. In this case, for example, the second metal layer disposed closer to the surface of the infrared reflective layer and thus requiring higher durability may be made of a gold alloy, whereas the first metal layer may be made of a less expensive silver alloy.

The film thickness of each of the first metal layer 514 and the second metal layer 554 is appropriately set in consideration of the refractive index of a material thereof, so as to allow the metal layers to function as a half mirror. The film thickness of each of the metal layers 514, 554 is preferably from 4 nm to 35 nm, more preferably from 5 nm to 20 nm.

A method of forming each of the metal layers 514, 554 is preferably a dry process, such as a sputtering process, a vacuum vapor deposition process, or an electron-beam deposition process. Among them, a sputtering process is particularly preferably, because it can be used with a roll-to-roll film formation process, or as a common process for forming the metal oxide layers, and can achieve a high film formation rate.

< Metal Oxide Layers >

Each of the metal oxide layers 512, 516, 552, 556 is provided with a view to controlling the amount of reflection of visible light at an interface with a corresponding one of the metal layers, thereby satisfying both a higher visible light transmittance and higher infrared reflectance, etc. The metal oxide layers also function as protective layers for preventing degradation of the metal layers. From a viewpoint of enhancing wavelength selectivity of reflection and transmission in the infrared reflective layer, the refractive index of each of the metal oxide layers with respect to visible light is preferably 1.5 or more, more preferably 1.6 or more, further more preferably 1.7 or more.

Examples of a material having the above refractive index include an oxide of at least one metal selected from the group consisting of titanium (Ti), zirconium (Zr), hafnium (Hf), niobium (Nb), zinc (Zn), aluminum (Al), gallium (Ga), indium (In), thallium (Tl), and tin (Sn), or a composite oxide of two or more of them. Particularly, in the present invention, as a material for the metal oxide layers 512, 516, 552, 556, a composite metal oxide containing zinc oxide is suitably used. Further, each of the metal oxide layers is preferably amorphous, because they also have a function of protecting the metal layers. In a case where each of the metal oxide layers is an amorphous layer containing zinc oxide, durability of the metal oxide layer itself is enhanced, and an action as a protective layer to the corresponding metal layer is increased, thereby suppressing degradation of the metal layer comprised of a silver alloy.

The content of zinc oxide in the metal oxide layers 512, 516, 552, 556 is preferably 3 weight parts or more, more preferably 5 weight parts or more, further preferably 7 weight parts or more, with respect to 100 weight parts of the total of the metal oxide layers. When the content of zinc oxide is set in the above range, each of the metal oxide layers is more likely to become an amorphous layer, and durability thereof tends to be enhanced. On the other hand, if the content of zinc oxide is excessively large, the durability tends to be conversely deteriorated, and the visible light transmittance tends to becomes lower. Therefore, the content of zinc oxide in the metal oxide layers 512, 516, 552, 556 is preferably 60 weight parts or less, more preferably 50 weight parts or less, further preferably 40 weight parts or less, with respect to 100 weight parts of the total of the metal oxide layers.

As the composite metal oxide containing zinc oxide, an indium-zinc composite oxide (IZO), a zinc-tin composite oxide (ZTO) or an indium-tin-zinc composite oxide (ITZO) is preferable from a viewpoint that they satisfy all of the visible light transmittance, refractive index, and durability. Each of the above composite oxides may further contain a metal such as Al or Ga, and an oxide thereof.

The thickness of each of the metal oxide layers 512, 516, 552, 556 is appropriately set in consideration of the refractive index of a material thereof, so as to allow the infrared reflective layer to transmit visible light and selectively reflect near-infrared rays. The thickness of each of the metal oxide layers 512, 516, 552, 556 can be adjusted to fall within the range of e.g., 3 nm to 80 nm, preferably 3 nm to 50 nm, more preferably 3 to 35 nm. A method of forming each of the metal oxide layers is preferably, but not particularly limited to, a dry process, such as a sputtering process, a vacuum vapor deposition process, or an electron-beam deposition process, as with the metal layers.

< Transparent Spacer Layer >

The transparent spacer 530 fulfills a roll as a spacer whose thickness is adjusted to change an optical distance between the first metal layer and the second metal layer. Further, by changing the optical distance, optical properties such as the transmittance and reflectance of light entering from the side of the substrate member can be adjusted to obtain an infrared reflective film which exhibits a high transmittance and a low reflectance at a wavelength of 600 nm, and exhibits a low transmittance and a high reflectance at a wavelength of 700 nm. Such optical properties are set according to the refractive index of the transparent spacer layer, and the materials and film thicknesses of the metal layer and the metal oxide layer. For example, an optical film thickness (a product of a physical film thickness and the refractive index) of the transparent spacer layer is preferably 70 nm to 300 nm, more preferably 80 nm to 250 nm, further preferably 90 nm to 200 nm. That is, considering that the refractive index of the transparent spacer layer is typically in the range of 1.3 to 1.7, the physical film thickness of the transparent spacer layer is preferably 40 nm to 200 nm, more preferably 50 nm to 180 nm, further preferably 60 nm to 160 nm.

The infrared reflective substrate 500 may be produced by sequentially forming the layers including the transparent spacer layer 530, on the film-based transparent substrate member 10. Alternatively, it may be produced by: giving an adhesive function to the transparent spacer layer 530; forming the second laminate 550 on a second film-based transparent substrate member (not shown) different from the film-based transparent substrate member 10 (first film-based transparent substrate member 10); and laminating, through the transparent spacer layer 530, the second laminate 550 to the first laminate 510 formed on the first film-based transparent substrate member 10. This lamination method provides excellent adhesiveness between the first film-based transparent substrate member 10 and the metal oxide layers 512, 556, and between the transparent spacer layer 530 and each of the metal oxide layers 516, 552, as compared with the former method in which the layers are sequentially formed on the first transparent substrate member 10.

Specifically, after forming the first laminate 510 on the first film-based transparent substrate member 10, a resin solution is applied onto the metal oxide layer 516 to form the transparent spacer layer 530. In order to enhance adhesiveness with respect to each of the metal oxide layers 516, 552, the transparent spacer layer 530 is formed using an adhesive. As the adhesive, it is preferable to use a polyurethane-based adhesive, a polyurea-based adhesive, a polyacrylate-based adhesive, a polyester-based adhesive, an epoxy-based adhesive, a silicone-based adhesive or the like. The above adhesives may be used in the form of a mixture of two or more thereof, or may be used in the form of a two-component curable adhesive or a solvent-type two-component adhesive.

The adhesive preferably comprises a cross-linking agent. The first laminate 510 and the second laminate 550 are laminated through the crosslinkable adhesive, and then they are subjected to cross-linking by heating, UV irradiation or the like, whereby adhesiveness between the transparent spacer layer 530 and each of the second and third metal oxide layers 516, 552 is enhanced. Examples of the cross-linking agent include a multifunctional vinyl compound, an epoxy-based cross-linking agent, an isocyanate-based cross-linking agent, an imine-based cross-linking agent, and a peroxide-based cross-linking agent.

The lamination between the first laminate 510 and the second laminate 550 may be performed by either one of a wet lamination method in which the laminates are laminated together immediately after applying an adhesive onto either one of the laminates, and a dry lamination method in which the laminates are laminated together after drying the adhesive. In the present invention, the adhesive layer formed as the transparent spacer layer 530 exerts a significant influence on the optical properties of the infrared reflective film, such as wavelength selectivity of transmission and reflectance. Therefore, it is preferable to perform the lamination based on the dry lamination method capable of accurately adjusting the thickness of the adhesive layer. In the lamination based on the dry lamination method, a dry lamination adhesive is used.

Examples of the dry lamination adhesive include a two-component curable adhesive, a solvent-type two-component adhesive, and a solvent-free one-component adhesive. As the two-component curable adhesive, it is possible to use an acrylic-based adhesive. Further, it is possible to use, as the solvent-type two-component adhesive, a polyester-based adhesive, a polyester/polyurethane-based adhesive, a polyether/polyurethane-based adhesive, and an epoxy-based adhesive, and to use, as the solvent-free one-component adhesive (moisture-curable adhesive), a polyether/polyurethane-based adhesive and an epoxy-based adhesive.

The application of a resin solution of the adhesive or the like can be performed by any of various roll coating methods, such as gravure coating, kiss roll coating, reverse coating, and Meyer bar coating, and other heretofore-known methods, such as spray coating, curtain coating, and lip coating. The thickness of the transparent spacer layer can be set to fall within a desired range by adjusting a solid content concentration and an application thickness of the resin solution.

After drying a solvent if needed, the first laminate 510 and the second laminate 550 are laminated such that the second metal oxide layer 516 and the third metal oxide layer 552 are opposed to each other. The lamination may be performed under heating, as needed basis. In a case where the cross-linkable adhesive is used, it is preferable to, after the lamination, perform a cross-linking treatment by heating, UV irradiation or the like.

In the infrared reflective substrate 500 in which the first laminate 510 and the second laminate 550 are laminated through the adhesive serving as the transparent spacer layer 530, the metal layers and the metal oxide layers are arranged between the two film-based transparent substrate members, and the second transparent substrate member formed with the second laminate functions as the after-mentioned protective layer, so that the infrared reflective layer is excellent in physical durability such as abrasion resistance. Further, the metal oxide layer is provided on each of the two film-based transparent substrate members without interposing another resin layer therebetween, and the two metal oxide layers are provided in contact with opposite surfaces of each of the metal layers, respectively, so that entry of water or the like is suppressed. Therefore, the infrared reflective film of the present invention has high chemical durability, so that it is possible to maintain a high heat shielding property and transparency, without degradation of the metal layers even in a situation where it is exposed to a high-temperature and high-humidity environment. However, the second film-based transparent substrate member on the fourth metal oxide layer is not an essential component. Thus, the second film-based transparent substrate member may be removed after the lamination between the first laminate 510 and the second laminate 550.

[Transparent Protective Layer]

With a view to preventing abrasion and degradation of the metal oxide layer and the metal layer, a transparent protective layer (not shown) may be provided on the second metal oxide layer of the infrared reflective layer, although the transparent protective layer is not essential in the present invention. From a standpoint that the transparent protective layer is formed within the range of a heatproof temperature of the first film-based transparent substrate member, an organic material is used as a material for the transparent protective layer. However, it is to be understood that an inorganic material may be used.

Preferably, the transparent protective layer is sufficiently low in terms of absorption of far-infrared rays, in addition to having a high visible light transmittance. If the far-infrared absorption rate is large, indoor far-infrared rays are absorbed by the transparent protective layer and the resulting heat is released to an outdoor space by heat conduction, so that the heat insulating property of the infrared reflective film tends to be deteriorated. On the other hand, when the transparent protective layer is sufficiently low in terms of absorption of far-infrared rays, the far-infrared rays are reflected toward an indoor space by the metal layers 514, 554 of the infrared reflective layer, so that the heat insulating effect of the infrared reflective film is enhanced. Examples of means to reduce a far-infrared absorption capacity of the transparent protective layer include a technique of reducing the thickness of the transparent protective layer, and a technique of forming the transparent protective layer using a material having a low far-infrared absorption rate.

In the case where the thickness of the transparent protective layer is adjusted to reduce the far-infrared absorption capacity thereof, the thickness of the transparent protective layer is preferably set to 300 nm or less, more preferably 200 nm or less, further preferably 100 nm or less. When the thickness of the transparent protective layer is reduced, the far-infrared absorption capacity becomes smaller and thus the heat insulating effect is enhanced, whereas a function as a protective layer to enhance durability of the transparent protective layer is likely to be deteriorated. Therefore, when the thickness of the transparent protective layer is set to 200 nm or less, it is preferable to form the transparent protective layer using a material having excellent strength, and enhance the durability of the infrared reflective layer itself. Examples of means to enhance the durability of the infrared reflective layer itself include a technique of reducing the content of silver while increasing the content of the non-silver metal such as palladium, in in each of the metal layers 514, 554. For example, in the case where each of the metal layers 514, 554 is made of a silver-palladium alloy, a content ratio by weight of silver to palladium is preferably adjusted to about 96 : 4 to 98 : 2.

On the other hand, in the case where the transparent protective layer is formed using a material having a low far-infrared absorption rate, the far-infrared absorption capacity can be kept low even when the thickness of the transparent protective layer is increased so as to enhance its protective effect on the infrared reflective layer. In this case, the durability of the infrared reflective film can be enhanced without excessively increasing the content of the non-silver metal such as palladium in each of the metal layer 524, 554. This is advantageous in enhancing both the visible light transmittance and the durability. As a material for the transparent protective layer, a compound containing a C = C bond, a C = O bond, a C - O bond and an aromatic ring in a small amount is suitably used from the viewpoint of reducing the far-infrared absorption capacity. Examples of a material suitably usable to compose the transparent protective layer include: polyolefin such as polyethylene or polypropylene; alicyclic polymer such as cycloolefin-based polymer; and rubber-based polymer.

The material suitably usable to compose the transparent protective layer is a type having a small far-infrared absorption rate, a high visible light transmittance, excellent adhesion with respect to the infrared reflective layer, and excellent abrasion resistance. From this viewpoint, it is particularly preferable to use rubber-based materials. Among them, a nitrile rubber-based material is suitably used.

A method of forming the transparent protective layer is not particularly limited. For example, the transparent protective layer may be formed by: dissolving a polymer such as hydrogenated nitrile rubber in a solvent, together with a cross-linking agent as necessary, to prepare a solution; applying the solution onto the infrared reflective layer 20; and drying the solution. The solvent is not particularly limited as long as it is capable of dissolving the polymer therein. For example, a low-boiling-point solvent such as methyl ethyl ketone (MEK) or methylene chloride is suitably used. In the case where such a low-boiling-point solvent, e.g., methyl ethyl ketone (boiling point: 79.5°C) or methylene chloride (boiling point: 40°C), is used as the solvent, the step of drying the solvent applied onto the infrared reflective layer 20 can be performed at a relatively low temperature, so that it becomes possible to suppress heat damage to the infrared reflective layer 20 and the film-based transparent substrate member 10. Further, in the case where the infrared reflective substrate 500 is produced by forming the second laminate 550 on the second transparent substrate member, and then laminating the second laminate 550 to the first laminate 510 through the transparent spacer layer 530 formed of the adhesive, as mentioned above, the second transparent substrate member may be formed to have a thickness and a material composition suited to the transparent protective layer, and used as the transparent protective layer.

In addition to the polymer, the material for the transparent protective layer may contain additives such as: a coupling agent including a silane coupling agent and a titanium coupling agent; a leveling agent; an ultraviolet absorber; an antioxidant; a heat stabilizer; a lubricant; a plasticizer; a coloration inhibitor; a flame retardant; and an antistatic agent. Although the content of these additives may be appropriately adjusted without impairing the object of the present invention, it is preferably adjusted to allow the content of the polymer in the transparent protective layer to become 80 weight% or more. For example, in the case where a hydrogenated nitrile rubber is used as the material for the transparent protective layer, the amount of the hydrogenated nitrile rubber contained in the transparent protective layer is preferably 90 weight% or more, more preferably 95 weight% or more, further preferably 99 weight% or more.

In the case where a polymer having a relatively low far-infrared absorption rate, such as hydrogenated nitrile rubber, is used as the material for the transparent protective layer, the thickness of the transparent protective layer is preferably 1 to 20 $\mu$m, more preferably 2 to 15 $\mu$m, further preferably 3 to 10 $\mu$m. As long as the thickness of the transparent protective layer is in the above range, the transparent protective layer itself can have sufficient physical strength to enhance the protective function with respect to the infrared reflective layer, and can also have a sufficiently small far-infrared absorption capacity.

[Other Layers]

As mentioned above, the infrared reflective substrate 500 according to the above embodiment has, on one principal surface of the film-based transparent substrate member 10, the first metal oxide layer, the first metal layer, the second metal oxide layer, the adhesive layer, the third metal oxide layer, the second metal layer and the fourth metal oxide layer. However, depending on usage conditions, an additional layer may be provided. For example, with a view to enhancement in interlayer adhesion, increase in strength of the infrared reflective film, etc., a hard coat layer, an easy-adhesion layer or the like may be provided between the film-based transparent substrate member 10 and the infrared reflective layer 20, or between the infrared reflective layer 20 and the transparent protective layer 30 in the case where the transparent protective layer is disposed on the infrared reflective layer. A material and a formation method for the additional layer such as an easy-adhesion layer or a hard coat layer are not particularly limited. For example, a transparent material having a high visible light transmittance is suitably used.

[Properties of Infrared Reflective Substrate comprising Infrared Reflective Layer 500]

In the infrared reflective layer 500, the refractive index (material) and thickness of each layer can be adjusted to set the transmittance of visible light having a wavelength of 600 nm or less to 50% or more, more preferably 55% or more, further preferably 60% or more. In particular, the transmittance at a wavelength between 450 nm and 550 nm is preferably set to 55% or more, more preferably 60% or more, further preferably 65% or more, most preferably 70% or more. Further, in the infrared reflective layer 500, the material type and thickness of each of the second and third metal oxide layers 516, 552 and the material type and thickness of the transparent spacer layer 530 are adjusted to adjust the optical distance between the first and second metal layers so as to allow the reflectance to gradually rise in a wavelength range of 600 nm to 700 nm. Specifically, in the infrared reflective layer 500, a slope ($dR_{700-600}$ (%/nm)) of the reflectance in the wavelength range of 600 nm to 700 nm is set to 0.12 or more, preferably 0.15 or more, more preferably 0.20 or more, further preferably 0.25 or more.

< Configuration with Three Metal Layers >

An infrared reflective substrate 600 according to another specific embodiment of the present invention comprises an infrared reflective layer comprising three metal layers. This infrared reflective layer 600 comprising three metal layers makes it possible to design sophisticated optical properties. Specifically, the infrared reflective substrate 600 as shown in FIG. 6 comprises a substrate member, and an infrared reflective layer on the substrate member, wherein the infrared reflective layer comprises a first metal oxide layer 612, a first metal layer 614, a second metal oxide layer 616, a second metal layer 618, and a third metal oxide layer 620, a third metal layer 622, and a fourth metal oxide layer 624, which are arranged in this order from the side of the substrate member. In this embodiment, the infrared reflective layer comprises three metal layers. However, in the present invention, the infrared reflective layer may comprises four or more metal layers, wherein it may be configured such that a metal layer and a metal oxide layer are arranged alternately in the same manner as that in the configuration with the three metal layer.

In the infrared reflective layer 600, the refractive index (material) and thickness of each layer can be adjusted to set the transmittance of visible light having a wavelength of 600 nm or less to 50% or more, more preferably 55% or more, further preferably 60% or more. In particular, the transmittance at a wavelength between 450 nm and 550 nm is preferably set to 55% or more, more preferably 60% or more, further preferably 65% or more, most preferably 70% or more. Further, in the infrared reflective layer 600, the material type and thickness of each layer are adjusted to allow the reflectance to gradually rise in the wavelength range of 600 nm to 700 nm. Specifically, in the infrared reflective layer 500, a slope ($dR_{700-600}$ (%/nm)) of the reflectance in the wavelength range of 600 nm to 700 nm is set to 0.12 or more, preferably 0.15 or more, more preferably 0.20 or more, further preferably 0.25 or more.

As the metal layers and the metal oxide layers of the infrared reflective substrate 600, it is possible to use metals and metal oxides as described in connection with the infrared reflective substrate 500. Further, as with the infrared reflective substrate comprised of the infrared reflective layer 500, a pressure-sensitive adhesive layer, a protective film and a hard coat layer may be used as necessary.

< Organic Multilayer Configuration >

An infrared reflective substrate according to yet another specific embodiment of the present invention comprises an infrared reflective layer obtained by forming two or more types of organic resins in a multilayer configuration. Specifically, the infrared reflective substrate comprises a substrate member, and an infrared reflective layer on the substrate member, wherein the infrared reflective layer comprises two types of organic resin layers different in refractive index and alternatively arranged. More specifically, the infrared reflective layer comprises a plurality of two-type resin laminates each of which comprises two or more first-type organic layers and two or more second-type organic layers, wherein the first-type organic layers and the second-type organic layers are arranged alternately, and the thickness of each of the first-type and second-type organic layers is gradually reduced in a direction away from the substrate member. That is, the second-type organic layer has the same thickness as that of the first-type organic layer located just below the second-type organic layer, and the first-type organic layers and the second-type organic layers are gradually thinned in a direction away from the substrate member. In infrared reflective layer in this embodiment, the two-type resin laminate is produced by repeating a process which comprises: forming a second-type organic layer having the same thickness as that of a first-type organic layer on a principal surface of the first-type organic layer; forming another first-type organic layer thinned by a certain thickness on the previously-formed second-type organic layer; and forming another second-type organic layer having the same thickness as that of the previously-formed first-type organic layer on the previously-formed first-type organic layer. Then, the two-type resin laminate is laminated plurally to form the infrared reflective substrate.

The material and thickness of each of the first-type and second-type organic layers can be adjusted to set the transmittance of visible light having a wavelength of 600 nm or less to 50% or more, more preferably 55% or more, further preferably 60% or more. In particular, the transmittance at a wavelength between 450 nm and 550 nm is preferably set to 55% or more, more preferably 60% or more, further preferably 65% or more, most preferably 70% or more. Further, the reflectance is adjusted to gradually rise from 600nm toward a long-wavelength side. Specifically, a slope (dR $_{700\text{-}600}$ (%/nm)) of the reflectance in the wavelength range of 600 nm to 700 nm is set to 0.12 or more, preferably 0.15 or more, more preferably 0.20 or more, further preferably 0.25 or more.

The thickness of the two-type resin laminate varies depending on required optical properties and materials to be used. For example, when the laminate is required to be maximally thickened, the thickness is preferably set to 180nm to 240 nm, more preferably 190 nm to 230 nm, further preferably 200 nm to 220 nm. On the other hand, when the laminate is required to be maximally thinned, the thickness is preferably set to 120 nm to 180 nm, more preferably 130 nm to 170 nm, further preferably 140 nm to 160 nm. The amount of change in thickness of each of the first-type and second-type organic layers is preferably set to 1 nm to 20 nm, more preferably 2 nm to 10 nm, further preferably 3 nm to 7 nm. The number of the first and second resin layers in each of the two-type resin laminates is preferably set to 5 to 30, more preferably 8 to 20, further preferably 10 to 15. Further, the number of the two-type resin laminates provided in the infrared reflective substrate is preferably set to 10 or more. Further, considering that spectra of the refractive index and the transmittance can be more accurately determined by increasing the number of the laminates, the laminate is more preferably provided by a number of 15 or more, further preferably 20 or more. However, from a viewpoint of reducing the member of production steps of the infrared reflective substrate, the number of the laminates is preferably set to 35 or less, more preferably 25 or less.

Materials usable for the first-type and second-type organic layers may be two types of organic materials different in refractive index. For example, the refractive index of the two types of organic materials is preferably set to 1.3 to 1.7, more preferably 1.4 to 1.6. Further, a difference in refractive index between the two types of organic materials is preferably set to 0.01 to 0.2, more preferably 0.03 to 0.1. For example, polyester resin and polyurethane resin may be used. Examples of the polyester resin typically include polyethylene terephthalate, polypropylene terephthalate, polybutylene terephthalate, polyethylene-2.6-naphthalate, poly-1,4-cyclohexanedimethylene terephthalate, and polyethylene diphenylate. In particular, polyethylene terephthalate is preferable, because it is low in cost, and thus usable in a large variety of applications. Further, the polyester resin is preferably an amorphous polyester resin having a structure obtained, e.g., through polycondensation using total at least three or more types of one or more dicarboxylic acid components and one or more diol components. The amorphous polyester resin may be a mixture of two or more types of polyester resins as long as they are amorphous.

< EXAMPLES >

Although the present invention will be described in detail based on various examples, it is to be understood that the present invention is not limited to the following examples.

[Inventive Example 1]

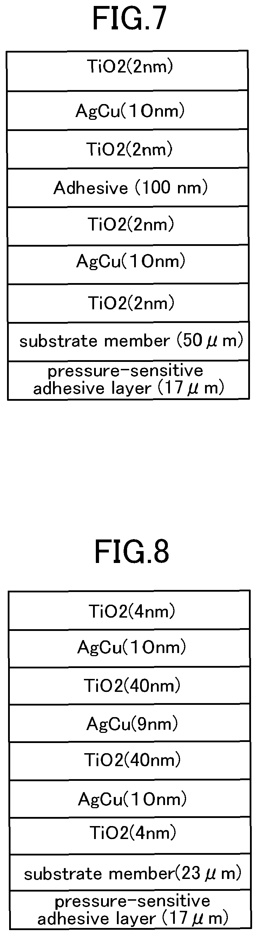

A 2 nm-thick layer of titanium oxide (TiO$_2$), a 10 nm-thick layer of silver alloy containing copper (2.5 wt%) as impurity and a 2 nm-thick layer of titanium oxide (TiO$_2$) were formed on one surface of a 50 $\mu$m-thick polyethylene terephthalate (PET) film-based substrate member by sputtering , to form a first laminate on the substrate member. Then, a photo-curable urethane acrylate resin solution was applied onto the first laminate, and, after being dried, irradiated with ultraviolet light to cure the resin solution, thereby forming a transparent spacer layer (adhesive layer). The amount of the resin solution was adjusted to allow the thickness of the transparent spacer layer obtained by curing the resin to become 100 nm. A 2 nm-thick layer of titanium oxide (TiO2), a 10 nm-thick layer of silver alloy containing copper (2.5 wt%) as impurity and a 2 nm-thick layer of titanium oxide (TiO2) were further formed as a second laminate on the hardened transparent spacer layer, and then a 17 $\mu$m-thick pressure-sensitive adhesive layer composed of an acrylic-based pressure-sensitive adhesive was laminated to the other surface of the substrate member to produce a polarizing film laminate of Inventive Example 1. A layer configuration of the polarizing film laminate of Inventive Example 1 is shown in FIG. 7.

[Inventive Example 2]

A polarizing film laminate of Inventive Example 2 is different from the polarizing film laminate of Inventive Example 1, only in that the thickness of the metal layer of silver alloy in each of the first and second laminates is 12 nm, and the thickness of the adhesive layer is 70 nm, and is identical thereto in other respects.

[Inventive Example 3]

A polarizing film laminate of Inventive Example 3 is different from the polarizing film laminate of Inventive Example 1, only in that the thickness of the metal layer of silver alloy in each of the first and second laminates is 12 nm, and is identical thereto in other respects.

[Inventive Example 4]

A polarizing film laminate of Inventive Example 4 is different from the polarizing film laminate of Inventive Example 1, only in that the thickness of the metal layer of silver alloy in each of the first and second laminates is 20 nm, and the thickness of the adhesive layer is 70 nm, and is identical thereto in other respects.

[Inventive Example 5]

A polarizing film laminate of Inventive Example 5 is different from the polarizing film laminate of Inventive Example 1, only in that the thickness of the metal layer of silver alloy in each of the first and second laminates is 15 nm, and is identical thereto in other respects.

[Inventive Example 6]

A polarizing film laminate of Inventive Example 6 is different from the polarizing film laminate of Inventive Example 1, only in that the thickness of the metal layer of silver alloy in each of the first and second laminates is 20 nm, and is identical thereto in other respects.

[Inventive Example 7]

A polarizing film laminate of Inventive Example 7 is different from the polarizing film laminate of Inventive Example 1, only in that the thickness of the metal layer of silver alloy in each of the first and second laminates is 25 nm, and the thickness of the adhesive layer is 70 nm, and is identical thereto in other respects.

[Inventive Example 8]

A polarizing film laminate of Inventive Example 8 comprises three metal layers. A 4 nm-thick layer of titanium oxide, a 10 nm-thick layer of silver alloy, a 40 nm-thick layer of titanium oxide, a 9 nm-thick layer of silver alloy, a 40 nm-thick layer of titanium oxide, a 10 nm-thick layer of silver alloy and a 4 nm-thick layer of titanium oxide were formed in this order on one surface of a 23 $\mu$m-thick PET film-based substrate member by sputtering. In each of the metal layers, the silver alloy contains copper in an amount of 2.5 wt% as impurity. Further, the same pressure-sensitive adhesive layer as that in Inventive Example 1 was laminated to the other surface of the PET film-based substrate member. The configuration of the resulting polarizing film laminate of Inventive Example 8 is shown in FIG. 8.

[Inventive Example 9]

A polarizing film laminate of Inventive Example 9 was produced by alternately laminating two layers of two types of urethane ester resins: urethane ester resin having a refractive index of 1.5 (low refractive index resin) and urethane ester resin having a refractive index of 1.55 (high refractive index resin). The thickness of each of the urethane resin layers was changed in the range of 210 nm to 150 nm in increments of 5 nm from the side of a pressure-sensitive adhesive layer to produce a two-type resin laminate having 13 layers of the above materials. Specifically, the two-type resin laminate was produced by repeating a process which comprises: forming a 210 nm-thick high refractive index resin layer on a 210 nm-thick low refractive index resin layer; forming a 205 nm-thick low refractive index resin layer on the 210 nm-thick high refractive index resin layer; and a 205 nm-thick high refractive index resin layer on the 205 nm-thick low refractive index resin layer. Then, an operation of producing the above two-type resin laminate was repeated 20 times to laminate twenty two-type resin laminates to produce a polarizing film laminate of Inventive Example 9.

[Comparative Example 1]

Except that the thickness of the adhesive layer was set to 50 nm, a polarizing film laminate of Comparative Example 1 was produced in the same manner as that in Inventive Example 1.

[Comparative Example 2]

A 3 nm-thick iron-chromium-nickel composite oxide ($TiO_2$) layer, a 20 nm-thick copper layer and a 3 nm-thick iron-chromium-nickel composite oxide layer were formed in this order on one surface of a first substrate member composed of a 24 $\mu$m-thick PET film, by sputtering. Further, a 2.9 $\mu$m-thick adhesive layer composed of an urethane-based adhesive solution was applied onto one surface of a second substrate member composed of a 24 $\mu$m-thick PET film, different from the first substrate member, and then the laminate including the first substrate member was laminated and bonded to the adhesive layer from the side of the iron-chromium-nickel composite oxide layer. Then, a 6.2 $\mu$m-thick pressure-sensitive adhesive layer composed of an acrylic-based pressure-sensitive adhesive was laminated to the other surface of the second substrate member on a side opposite to the adhesive layer to produce a polarizing film laminate of Comparative Example 2.

[Comparative Example 3]

A polarizing film laminate of Comparative Example 3 comprises three metal layers. A 4 nm-thick layer of titanium oxide, a 10 nm-thick layer of silver alloy, a 50 nm-thick layer of titanium oxide, a 10 nm-thick layer of silver alloy, a 50 nm-thick layer of titanium oxide, a 10 nm-thick layer of silver alloy and a 4 nm-thick layer of titanium oxide were formed in this order on one surface of a 23 $\mu$m-thick PET film-based substrate member by sputtering. In each of the metal layers, the silver alloy contains copper in an amount of 2.5 wt% as impurity. Further, the same pressure-sensitive adhesive layer as that in Inventive Example 1 was laminated to the other surface of the PET film-based substrate member.

[Comparative Example 4]

A polarizing film laminate of Comparative Example 4 was produced by alternately laminating two layers of two types of urethane ester resins: urethane ester resin having a refractive index of 1.5 (low refractive index resin) and urethane ester resin having a refractive index of 1.55 (high refractive index resin), as with Inventive Example 9. The thickness of each of the urethane resin layers was changed in the range of 175 nm to 1115 nm in increments of 5 nm from the side of a pressure-sensitive adhesive layer to produce an alternately-arranged laminate as a laminate of 13 layers. Then, an operation of producing the above alternately-arranged laminate was repeated 20 times to laminate twenty alternately-arranged laminates to produce the polarizing film laminate of Comparative Example 4.
A method of measuring properties of the polarizing film laminates will be described below.

[Thickness of each Layer]

A sample was processed by a focused ion beam (FIB) method using a focused ion beam machining and observation apparatus (product name "FB-2100", manufactured by Hitachi, Ltd.), and a cross-section of the resulting sample was observed by a field-emission type transmission electron microscope (product name "HF-2000", manufactured by Hitachi, Ltd.), thereby determining respective thicknesses of the layers making up the infrared reflective layer. Respective thicknesses of the hard coat layer formed on the substrate member, and the transparent protective layer, were determined by calculation from an interference pattern caused by reflection of visible light when light is entered from the side of the measurement target, by using an instantaneous multi-photometric system (product name "MCPD 3000", manufactured by Otsuka Electronics Co., Ltd.).

[Visible Light Transmittance, Visible Light Reflectance and Visible Light Absorption rate]

The visible light transmittance (VLT) and the visible light reflectance were determined according to JIS A5759-2008 (Adhesive films for glazings), using a spectrophotometer (product name "U-4100", manufactured by Hitachi High-Technologies Corporation).

[Slope of Reflectance]

Using a spectrum obtained by the spectrophotometer, a slope ($R_{700-600}$) of the reflectance between a reflectance $R_{600}$ at a wavelength of 600 nm and a reflectance $R_{700}$ at a wavelength of 700 nm was determined. The slope of the reflectance is calculated by the formula 1. If the reflectance at a wavelength of 600 nm or 700 nm is determined using a value of one point at a wavelength of 600 nm or 700 nm, it is likely to be influenced by a measurement error of the spectrum. Thus, the reflectance at 600 nm or 700 nm was determined using an average of values at a wavelength of 600 nm or 700 nm and at wavelengths before and after 600 nm or 700 nm by 25 nm. Specifically, an average of reflectance values at 575 nm, 600 nm and 625 was used as the reflectance $R_{600}$ at a wavelength of 600 nm, and an average of reflectance values at 675 nm, 700 nm and 725 was used as the reflectance $R_{700}$ at a wavelength of 700 nm.

[Reflectance Ratio]

A reflectance ratio $R_{700}/R_{600}$ was calculated by dividing the reflectance $R_{700}$ at a wavelength of 700 nm by the reflectance $R_{600}$ at a wavelength of 600 nm.

[Top Wavelength in terms of Visible Light Transmittance]

Using a spectrum obtained by the spectrophotometer, a wavelength having the highest transmittance in the wavelength range of 400 nm to 700 nm was defined as a top wavelength in terms of the visible light transmittance.

[Shading Coefficient]

A solar transmittance τe and a soar reflectance pe were measured using a spectrophotometer (product name "U-4100", manufactured by Hitachi High-Technologies Corporation) to calculate the shading coefficient according to the method A in JIS A5759: 2008 (Adhesive films for glazings).

[Balance between Visible Light Transmittance and Shading Coefficient]

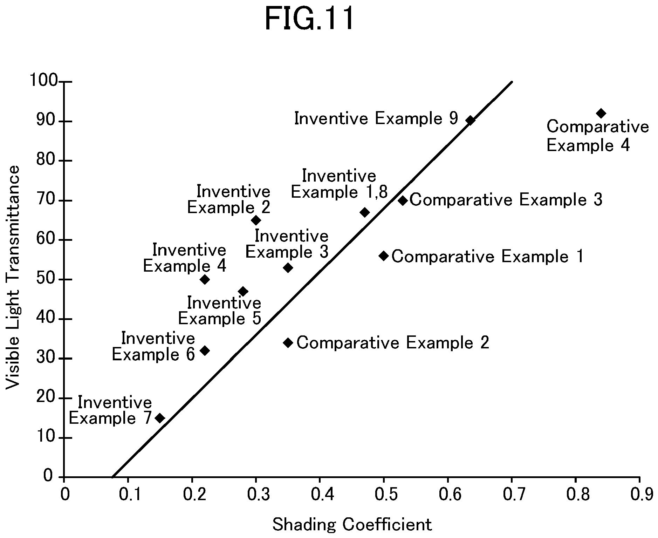

The visible light transmittance can be raised by increasing the shading coefficient (i.e., by weakening the level of shading). That is, a larger amount of light is allowed to be transmitted as the level of shading is more wakened, i.e., there is a trade-off relationship between two properties, and it is relatively easy to raise the level of one of them. A polarizing film having the two properties at a high level can be deemed to be a high-performance polarizing film. Thus, a value of ($160 \times SC - 12$) was calculated to conduct a comparison in terms of VLT. When a sample had a VLT equal to greater than a value of ($160 \times SC - 12$), it was evaluated as "Good", and a sample had a VLT less than the value, it was evaluated as "Good". Further, FIG. 11 is a graph having a horizontal axis representing the shading coefficient, and a vertical axis representing the VLT. In the graph, a line representing VLT = ($160 \times SC - 12$) is added. That is, a sample satisfying a condition: VLT $\geq$ ($160 \times SC - 12$), is evaluated as "Good", and a sample failing to satisfy the condition is evaluated as "NG".
A result of the measurement is shown in the following Table 1.

TABLE 1

| | Slope of Reflectance | Visible light Absorptance Avis | Reflectance $R_{600}$ | Reflectance $R_{700}$ | $R_{700}/R_{600}$ | Top Wavelength in terms of Visible Light Transmittance | Visible Light Transmittance (VLT) | Shading Coefficient | 160×SC-12 | Balance between Visible Light Transmittance and Shading Coefficient |
|---|---|---|---|---|---|---|---|---|---|---|
| Inventive Example 1 | 0.28 | 21% | 15% | 38% | 2.5 | 515nm | 67% | 0.47 | 63 | Good |
| Inventive Example 2 | 0.45 | 20% | 30% | 75% | 2.5 | 550nm | 65% | 0.30 | 36 | Good |
| Inventive Example 3 | 0.34 | 27% | 27% | 62% | 2.3 | 525nm | 53% | 0.35 | 44 | Good |
| Inventive Example 4 | 0.36 | 22% | 40% | 76% | 1.9 | 550nm | 50% | 0.22 | 23 | Good |
| Inventive Example 5 | 0.25 | 28% | 41% | 66% | 1.6 | 485nm | 47% | 0.28 | 33 | Good |
| Inventive Example 6 | 0.18 | 30% | 57% | 75% | 1.3 | 510nm | 32% | 0.22 | 23 | Good |
| Inventive Example 7 | 0.12 | 16% | 72% | 84% | 1.2 | 450nm | 15% | 0.15 | 12 | Good |
| Inventive Example 8 | 0.18 | 20% | 12% | 26% | 2.2 | 580nm | 67% | 0.47 | 63 | Good |
| Inventive Example 9 | 0.49 | 4% | 10% | 57% | 5.7 | 650nm | 90% | 0.64 | 90 | Good |
| Comparative Example 1 | 0.08 | 18% | 31% | 39% | 1.3 | 435nm | 56% | 0.50 | 70 | NG |
| Comparative Example 2 | 0.16 | 41% | 33% | 49% | 1.5 | 590nm | 34% | 0.35 | 44 | NG |
| Comparative Example 3 | 0.11 | 18% | 7% | 9% | 1.2 | 535nm | 70% | 0.53 | 73 | NG |
| Comparative Example 4 | 0.00 | 4% | 4% | 4% | 1.0 | 580nm | 92% | 0.84 | 122 | NG |

As can be understood from Table 1, in all Inventive Examples 1 to 9, the slope of the reflectance in the wavelength range of 600 nm to 700 nm is 0.12 or more, and the visible light absorption rate is less than 30%. Thus, all Inventive Examples 1 to 9 have a high visible light transmittance and a low shading coefficient, i.e., achiever a good balance between the visible light transmittance and the shading coefficient. This is because the slope of the reflectance is sufficiently high such that the reflectance in the near-infrared region becomes higher, so that the shading coefficient becomes lower in the near-infrared region, and, on the other hand, in the visible light region, the reflectance is relatively low and the visible light absorption rate is also relatively low, so that the visible light transmittance becomes higher. Further, in all Inventive Examples, the top wavelength in terms of the visible light transmittance falls within the range of 450 nm to 650 nm. Thus, the top wavelength in terms of the visible light transmittance exists at both ends of the visible light region, i.e., at distant positions of 400 nm and 700 nm, to provide a high visible light transmittance thereat.

On the other hand, in Comparative Examples 1, 3 and 4, the slope of the reflectance is smaller than 0.12, so that the balance between the visible light transmittance and the shading coefficient is deteriorated. Particularly, in Comparative Example 1, the top wavelength in terms of the visible light transmittance is 435 nm, and the transmittance is low in the entire visible light region. Further, in Comparative Example 4, the slope of the reflectance is 0.00, so that the balance between the visible light transmittance and the shading coefficient is evaluated as NG, and the value of (160 × SC - 12) is 122, which significantly exceeds a visible light transmittance of 92%.

Further, in Comparative Example 2, although the slope of the reflectance has a high value of 0.16, the visible light absorption rate has a high value of 41%, so that the visible light transmittance is low and thereby the balance between the visible light transmittance and the shading coefficient is deteriorated.

FIG. 9a shows transmission, absorption and reflection spectra in a wavelength range of 350 nm to 800 nm of Inventive Example 1, and FIG. 9b shows the same spectra of Comparative Example 1. In Inventive Example 1, at a wavelength of 600 nm, the reflectance has a low value of 10%, and, on the other hand, at a wavelength of 700 nm, the reflectance rises close to 30%. That is, the slope of the reflectance becomes larger in the wavelength range of 600 nm to 700 nm. On the other hand, in Comparative Example 1, the reflectance gently rises from 400 nm toward the long-wavelength side. Therefore, the shading coefficient is 56% at most due to poor visible light transmittance.

FIG. 10a shows transmission, absorption and reflection spectra in a wavelength range of 400 nm to 900 nm of Inventive Example 9, and FIG. 10b shows the same spectra of Comparative Example 4. In Inventive Example 9, at a wavelength of 600 nm, the reflectance has a low value of 10% or less, and, at a wavelength of 700 nm, the reflectance exceeds 40%. That is, the slope of the reflectance becomes larger in the wavelength range of 600 nm to 700 nm. On the other hand, in Comparative Example 4, the reflectance is below 10% at 600 nm and 700 nm. Then, the slope of the reflectance becomes larger on the long-wavelength side with respect to about 750 nm, and exceeds 40% at a wavelength of about 850 nm. Therefore, in Combative Example 4, the shading coefficient has a significantly high value of 0.84. On the other hand, although the visible light transmittance in Comparative Example 4 is higher than that in Inventive Example 9, the visible light transmittance in Inventive Example 9 is 90% whereas the visible light transmittance in Comparative Example 4 is 92%, i.e., the visible light transmittance is improved by only 2%. This is because the weighting factor is small in the vicinity of 700 nm, so that even if the transmittance in the vicinity of 700 nm is increased, the rate of increase in the entire visible light transmittance is limited.

FIG. 11 is a graph showing a relationship between the shading coefficient and the visible light transmittance in each of Inventive Examples and Comparative Examples, wherein the horizontal axis represents the shading coefficient, and the vertical axis represents the visible light transmittance. It should be noted here that the shading coefficient and the visible light transmittance in Inventive Examples 1 and 8 had the same values, so that they are indicated by one common dot.

Referring to FIG. 11, all Inventive Examples satisfy the condition: VLT ≥ (160 × SC - 12). On the other hand, Comparative Examples fail to satisfy the condition. Further, it is obvious to a person of ordinary skill in the art to, based on Inventive Examples, raise the visible light transmittance by increasing the shading coefficient, or raise the shading coefficient by increasing the visible light transmittance. For example, in Inventive Example 2, a value of VLT - 160 × SC is 17. Thus, based on the configuration of Inventive Example 2, it is possible to produce a high-performance polarizing film satisfying a condition:

$$\mathrm{VLT} = 160 \times \mathrm{SC} + 17.$$

Although the present invention has been shown and described based on a specific embodiment thereof, it is to be understood that the present invention is not limited to the illustrated embodiment, but the scope of the present invention should be defined only by the appended claims

LIST OF REFERENCE SIGNS

100: infrared reflective substrate
10: transparent substrate member
20: infrared reflective layer
50: window glass
60: pressure-sensitive adhesive layer
500: infrared reflective layer 500
510: first laminate
512: first metal oxide layer
514: first metal layer
516: second metal oxide layer
530: transparent spacer layer
550: second laminate
552: third metal oxide layer
554: second metal layer
556: fourth metal oxide layer
600: infrared reflective substrate
612: first metal oxide layer
614: first metal layer
616: second metal oxide layer
618: second metal layer
620: third metal oxide layer
622: third metal layer
624: fourth metal oxide layer

**Claims**

1. An infrared reflective substrate comprising a transparent substrate member and an infrared reflective layer, wherein

    the infrared reflective substrate has a visible light absorption rate of 0.3 or less, and a reflectance whose slope in a wavelength range of 700 nm to 600 nm (slope $dR_{700\text{-}600}$) is 0.12 or more,
    and wherein the slope $dR_{700\text{-}600}$ of the reflectance is expressed as follows:

$$dR_{700\text{-}600} = (R_{700} - R_{600}) / 100 \text{ (nm)}$$

    , where $R_{600}$ represents a reflectance (%) with respect to light entering from the side of the transparent substrate member as measured at a wavelength of 600 nm, and $R_{700}$ represents a reflectance (%) with respect to light entering from the side of the transparent substrate member as measured at a wavelength of 700 nm.

2. The infrared reflective substrate as recited in claim 1, wherein the reflectance $R_{600}$ is 10 % to 60 %.

3. The infrared reflective substrate as recited in claim 1 or 2, wherein the reflectance $R_{700}$ is 25 % to 85 %.

4. The infrared reflective substrate as recited in any one of claims 1 to 3, wherein a ratio of the reflectance $R_{700}$ to the reflectance $R_{700}$ is 1.2 or more.

5. The infrared reflective substrate as recited in any one of claims 1 to 4, wherein a top wavelength in terms of visible light transmittance lies between wavelengths of 450 nm and 650 nm.

6. The infrared reflective substrate as recited in any one of claims 1 to 5, wherein the transparent substrate member is a film, wherein the infrared reflective substrate further comprises a pressure-sensitive adhesive layer on one surface of the transparent substrate member whose opposite surface has the infrared reflective layer.

7. The infrared reflective substrate as recited in any one of claims 1 to 5, wherein the transparent substrate member is a glass.

8. The infrared reflective substrate as recited in any one of claims 1 to 7, which further comprises a transparent protective film on the infrared reflective layer.

# FIG.1

# FIG.2

# FIG.3

# FIG.4

Visible light

Top position of visible light

Slope

Transmittance

Reflectance

[%]

Wavelength (nm)

# FIG.5

556 }
554 } 550
552 }
530
516 }
514 } 510
512 }
10
60

# FIG.6

624
622
620
618
616
614
612
10
60

# FIG.7

| TiO2(2nm) |
|---|
| AgCu(10nm) |
| TiO2(2nm) |
| Adhesive (100 nm) |
| TiO2(2nm) |
| AgCu(10nm) |
| TiO2(2nm) |
| substrate member (50 $\mu$ m) |
| pressure-sensitive adhesive layer (17 $\mu$ m) |

# FIG.8

| TiO2(4nm) |
|---|
| AgCu(10nm) |
| TiO2(40nm) |
| AgCu(9nm) |
| TiO2(40nm) |
| AgCu(10nm) |
| TiO2(4nm) |
| substrate member(23 $\mu$ m) |
| pressure-sensitive adhesive layer (17 $\mu$ m) |

## FIG.9a

## FIG.9b

# FIG.10a

# FIG.10b

# FIG.11

## INTERNATIONAL SEARCH REPORT

| International application No. |
| --- |
| PCT/JP2018/019946 |

**A. CLASSIFICATION OF SUBJECT MATTER**
Int.Cl. G02B5/26(2006.01)i, B32B7/02(2006.01)i, B32B17/06(2006.01)i, C09J7/20(2018.01)i, C09T201/00(2006.01)i, G02B5/28(2006.01)i

According to International Patent Classification (IPC) or to both national classification and IPC

**B. FIELDS SEARCHED**

Minimum documentation searched (classification system followed by classification symbols)
Int.Cl. G02B5/26, B32B7/02, B32B17/06, C09J7/20, C09J201/00, G02B5/28

Documentation searched other than minimum documentation to the extent that such documents are included in the fields searched
Published examined utility model applications of Japan        1922-1996
Published unexamined utility model applications of Japan      1971-2018
Registered utility model specifications of Japan              1996-2018
Published registered utility model applications of Japan      1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2010-149347 A (TOKAI RUBBER INDUSTRIES, LTD.) 08 July 2010, paragraphs [0029], [0125], [0164], [0172], [0178] (Family: none) | 1-4, 6<br>5, 7-8 |
| Y | JP 2012-009873 A (ASAHI GLASS CO., LTD.) 12 January 2012, paragraphs [0012], [0022], [0045], fig. 6-7 & US 2007/0224432 A1, paragraphs [0029], [0046], [0092], fig. 6-7 & WO 2006/059448 A1 & EP 1819210 A1 & CA 2588815 A1 & KR 10-2007-0084168 A & CN 101066011 A & TW 200633634 A | 5, 7-8 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 August 2018 (03.08.2018) | Date of mailing of the international search report<br>14 August 2018 (14.08.2018) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/019946 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-098131 A (NITTO DENKO CORP.) 07 April 2000, paragraph [0035], fig. 3-4 & US 6333592 B1, column 12, lines 3-18, fig. 3-4 & EP 0990928 A1 & DE 69922605 T2 | 5, 7-8 |
| P, X | WO 2017/131174 A1 (HITACHI MAXELL, LTD.) 03 August 2017, paragraphs [0181], [0257], fig. 14 (Family: none) | 1-4, 6, 8 |
| A | WO 2011/040578 A1 (ASAHI GLASS CO., LTD.) 07 April 2011, entire text, all drawings & US 2012/0183763 A1, entire text, all drawings & CN 102575142 A | 1-8 |
| A | JP 2006-505811 A (NV BEKAERT SA) 16 February 2006, entire text, all drawings & US 2006/0057399 A1, entire text, all drawings & WO 2004/042435 A1 & WO 2004/042436 A1 & DE 60305730 T2 & KR 10-2005-0084671 A & CN 1708700 A | 1-8 |
| A | JP 2000-117871 A (SUZUTORA KK) 25 April 2000, entire text, all drawings (Family: none) | 1-8 |
| A | JP 04-504555 A (SOUTHWALL TECHNOLOGIES, INC.) 13 August 1992, entire text, all drawings & US 4799745 A, entire text, all drawings & WO 1990/008334 A1 & EP 0454666 B1 & DE 68924853 T2 & CA 1335086 C | 1-8 |

Form PCT/ISA/210 (continuation of second sheet) (January 2015)

**EP 3 647 838 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011509193 A

- JP 2013061370 A